# EUROPÄISCHE PATENTANMELDUNG

(11) **EP 2 093 459 A2**
(43) Veröffentlichungstag der Anmeldung: **26.08.2009**
(21) Anmeldenummer: 09153074.1
(22) Anmeldetag: 18.02.2009
(51) Int. Cl.: F16H 45/02

(54) **Hydrodynamische Kopplungseinrichtung, insbesondere Drehmomentwandler**

(30) Priorität: 21.02.2008 DE 102008010276
(71) Anmelder: ZF Friedrichshafen AG, 88038 Friedrichshafen (DE)
(72) Erfinder: Gajda, Christoph, 97421 Schweinfurt (DE); Heuler, Michael, 97080 Würzburg (DE); Reinhardt, Bernd, Farmington Hills, MI 48335 (US); Sueck, Gregor, 97526 Sennfeld (DE); Zerner, Frank, 96120 Bischberg (DE)

(57) **Zusammenfassung**

Eine hydrodynamische Kopplungseinrichtung, insbesondere Drehmomentwandler, umfasst ein mit Fluid gefülltes oder füllbares Gehäuse (12) mit einem Pumpenrad (18), ein im Innenraum (22) des Gehäuses (12) angeordnetes Turbinenrad (24), eine Überbrückungskupplungsanordnung (44) mit einer ersten Gruppe (46) von Reibelementen, welche durch einen äußeren ersten Reibelemententräger (47) mit dem Gehäuse (12) zur gemeinsamen Drehung um eine Drehachse (A) gekoppelt sind und einer zweiten Gruppe (48) von Reibelementen, welche durch einen inneren zweiten Reibelemententräger (50) mit einem Abtriebsorgan (34) zur gemeinsamen Drehung um die Drehachse (A) gekoppelt sind, wobei der Innenraum (22) des Gehäuses (12) durch ein Kolbenelement (52) in einen das Turbinenrad (24), die Überbrückungskupplungsanordnung (44) und eine axial zwischen dem Turbinenrad (24) und der Überbrückungskupplungsanordnung (44) angeordnete Torsionsschwingungsdämpferanordnung (30) enthaltenden ersten Raumbereich (54) und einen zweiten Raumbereich (56) unterteilt ist, wobei die Reibelemente (58, 60, 62) der ersten Gruppe (46) von Reibelementen an ihrem Außenumfangsbereich eine Verzahnungsformation (84) aufweisen, die mit einer Gegenverzahnungsformation (86) am ersten Reibelemententräger (47) in Drehkopplungseingriff steht, und wobei wenigstens bei dem der Torsionsschwingungsdämpferanordnung (30) axial am nächsten positionierten Reibelement (62) der ersten Gruppe (46) von Reibelementen die Verzahnungsformation (84) und die Gegenverzahnungsformation (86) derart aufeinander abgestimmt sind, dass sie eine Fluiddurchtrittspassage (104) bilden.

## Beschreibung

Die vorliegende Erfindung betrifft eine hydrodynamische Kopplungseinrichtung, insbesondere Drehmomentwandler, umfassend ein mit Fluid gefülltes oder füllbares Gehäuse mit einem Pumpenrad, ein im Innenraum des Gehäuses angeordnetes Turbinenrad, eine Überbrückungskupplungsanordnung mit einer ersten Gruppe von Reibelementen, welche durch einen äußeren ersten Reibelemententräger mit dem Gehäuse zur gemeinsamen Drehung um eine Drehachse gekoppelt sind und einer zweiten Gruppe von Reibelementen, welche durch einen inneren zweiten Reibelemententräger mit einem Abtriebsorgan zur gemeinsamen Drehung um die Drehachse gekoppelt sind, wobei der Innenraum des Gehäuses durch ein Kolbenelement in einen das Turbinenrad, die Überbrückungskupplungsanordnung und eine axial zwischen dem Turbinenrad und der Überbrückungskupplungsanordnung angeordnete Torsionsschwingungsdämpferanordnung enthaltenden ersten Raumbereich und einen zweiten Raumbereich unterteilt ist, wobei die Reibelemente der ersten Gruppe von Reibelementen an ihrem Außenumfangsbereich eine Verzahnungsformation aufweisen, die mit einer Gegenverzahnungsformation am ersten Reibelemententräger in Drehkopplungseingriff steht.

Aus der DE 103 50 935 A1 ist ein hydrodynamischer Drehmomentwandler bekannt, bei welchem bei den beiden Gruppen von Reibelementen die mit dem inneren Reibelemententräger gekoppelten Reibelemente Reibbeläge aufweisen, während die mit dem äußeren Reibelementen gekoppelten Reibelemente keine Reibbeläge aufweisen. Um insbesondere im Schlupfzustand für eine Wärmeabfuhr aus den reibend miteinander in Wechselwirkung tretenden Oberflächen zu sorgen, werden die Reibelemente von dem im ersten Raumbereich vorhandenen Fluid umströmt. Insbesondere wird das Fluid in den ersten Raumbereich derart eingeleitet, dass es vom Turbinenrad her kommend die Torsionsschwingungsdämpferanordnung radial außen umströmt und die Überbrückungskupplungsanordnung, also insbesondere die Reibelemente derselben, ebenfalls von radial außen anströmt. Das Fluid wird dann nach radial innen in einen Bereich zwischen dem Kolbenelement und der Torsionsschwingungsdämpferanordnung abgezogen.

Um bei derartigen hydrodynamischen Kopplungseinrichtungen vor allem im Reibzustand der Überbrückungskupplungsanordnung Wärme aus dem kritischen Bereich der in Reibwechselwirkung miteinander stehenden Oberflächen der Reibelemente abzuziehen, ist es bekannt, im Bereich der Reibbeläge Strömungskanalanordnungen vorzusehen, welche nach radial außen und nach radial innen offen sind und somit auch dann, wenn die Oberflächen der Reibelemente aneinander anliegen, eine Fluidströmung zulassen. Diese Fluidströmung wird im Wesentlichen definiert durch die zwischen dem radial inneren und dem radial äußeren Bereich vorhandene Druckdifferenz und den Strömungswiderstand der Strömungskanalanordnungen. Unterstützt werden kann die Strömung noch durch eine spezielle Geometrie der Strömungskanalanordnungen, so dass diese im Rotationsbetrieb selbst einen Fördereffekt erreichen können.

Es ist die Zielsetzung der vorliegenden Erfindung, eine hydrodynamische Kopplungseinrichtung, insbesondere Drehmomentwandler, vorzusehen, welche ein verbessertes Wärmeabfuhrverhalten für die Überbrückungskupplungsanordnung aufweist.

Erfindungsgemäß wird diese Aufgabe gelöst durch eine hydrodynamische Kopplungseinrichtung, insbesondere Drehmomentwandler, umfassend ein mit Fluid gefülltes oder füllbares Gehäuse mit einem Pumpenrad, ein im Innenraum des Gehäuses angeordnetes Turbinenrad, eine Überbrückungskupplungsanordnung mit einer ersten Gruppe von Reibelementen, welche durch einen äußeren ersten Reibelemententräger mit dem Gehäuse zur gemeinsamen Drehung um eine Drehachse gekoppelt sind und einer zweiten Gruppe von Reibelementen, welche durch einen inneren zweiten Reibelemententräger mit einem Abtriebsorgan zur gemeinsamen Drehung um die Drehachse gekoppelt sind, wobei der Innenraum des Gehäuses durch ein Kolbenelement in einen das Turbinenrad, die Überbrückungskupplungsanordnung und eine axial zwischen dem Turbinenrad und der Überbrückungskupplungsanordnung angeordnete Torsionsschwingungsdämpferanordnung enthaltenden ersten Raumbereich und einen zweiten Raumbereich unterteilt ist, wobei die Reibelemente der ersten Gruppe von Reibelementen an ihrem Außenumfangsbereich eine Verzahnungsformation aufweisen, die mit einer Gegenverzahnungsformation am ersten Reibelemententräger in Drehkopplungseingriff steht, und wobei wenigstens bei dem der Torsionsschwingungsdämpferanordnung axial am nächsten positionierten Reibelement der ersten Gruppe von Reibelementen die Verzahnungsformation und die Gegenverzahnungsformation derart aufeinander abgestimmt sind, dass sie eine Fluiddurchtrittspassage bilden.

Durch das Bereitstellen einer definierten Fluiddurchtrittspassage wird eine verbesserte Fluidströmungsverbindung zwischen dem radial äußeren Bereich der zu kühlenden Reibelemente und dem ersten Raumbereich im Gehäuseinnenraum erzielt. Dies vermindert den Strömungswiderstand beim Anströmen bzw. Abströmen und führt somit bei gegebenen Druckverhältnissen zu einer besseren Durchströmbarkeit des thermisch kritischen Bereichs.

Dieser Effekt der verbesserten Strömungsanbindung an den ersten Raumbereich kann dadurch noch weiter unterstützt werden, dass das der Torsionsschwingungsdämpferanordnung axial am nächsten positionierte Reibelement der ersten Gruppe von Reibelementen axial bezüglich des ersten Reibelemententrägers durch ein Sicherungselement gestützt ist, und dass das Sicherungselement und die Gegenverzahnungsformation am ersten Reibelemententräger derart aufeinander abgestimmt sind, dass sie eine an die Fluiddurchtrittspassage anschließende weitere Fluiddurchtrittspassage bilden.

Bei einer besonders bevorzugten Ausgestaltungsform kann vorgesehen sein, dass bei einem dem Kolbenelement axial am nächsten positionierten Reibelement der ersten Gruppe von Reibelementen die Verzahnungsformation und die Gegenverzahnungsformation derart aufeinander abgestimmt sind, dass ein in einem Eingriffsbereich der Verzahnungsformation und der Gegenverzahnungsformation gebildeter Fluiddurchtrittsquerschnitt kleiner ist als bei dem der Torsionsschwingungsdämpferanordnung axial am nächsten positionieren Reibelement der ersten Gruppe von Reibelementen. Durch diese Ausgestaltung wird sichergestellt, dass Fluid bevorzugt in einer Richtung strömen kann oder aus einer Richtung anströmen kann, die eine direkte Verbindung mit dem ersten Raumbereich bzw. dem von Fluid durchströmbaren Volumen desselben sicherstellt.

Um insbesondere auch dann, wenn die Überbrückungskupplungsanordnung im Einrückzustand ist, also die Oberflächen der einzelnen Reibelemente aneinander anliegen, eine definierte Kühlwirkung insbesondere im axial zentralen Bereich sicherzustellen, wird vorgeschlagen, dass an den Reibelementen der ersten Gruppe von Reibelementen oder/und den Reibelementen der zweiten Gruppe von Reibelementen Strömungskanalformationen vorgesehen sind, über welche Fluid zwischen einem radial inneren Bereich und einem radial äußeren Bereich der Reibelemente strömen kann.

Vorzugsweise ist im ersten Raumbereich Fluid radial innen zwischen dem Kolbenelement und der Torsionsschwingungsdämpferanordnung zuführbar. Dies bedeutet, dass das Fluid, welches frisch und mit vergleichsweise geringer Temperatur in den ersten Raumbereich eintritt, von radial innen nach radial außen auf die Reibelemente zuströmt und dabei im Rotationsbetrieb insbesondere in dieser Strömungsrichtung von den einwirkenden Fliehkräften unterstützt wird.

Gemäß einem weiteren besonders vorteilhaften Aspekt wird vorgeschlagen, dass die Torsionsschwingungsdämpferanordnung sich nach radial außen bis über die Überbrückungskupplungsanordnung hinaus erstreckt und in Verbindung mit dem Gehäuse einen Strömungsumlenkungsraumbereich bildet, in welchem durch die Fluiddurchtrittspassage hindurch getretenes und nach radial außen geströmtes Fluid nach radial innen in Richtung auf den radial inneren Bereich der Reibelemente zu umgelenkt wird. Durch das Bereitstellen eines derartigen Strömungsumlenkungsraumbereichs wird gewährleistet, dass im Bereich der Reibelemente selbst eine Fluidzirkulation aufgebaut wird, die vor allem dann, wenn ein Schlupfzustand vorliegt, auch fliehkraftbedingt unterstützt ist und somit zumindest teilweise unabhängig ist, von der Fluidzufuhr und Fluidabfuhr in bzw. aus dem ersten Raumbereich.

Der Aufbau kann weiter derart sein, dass die Torsionsschwingungsdämpferanordnung einen im Wesentlichen radial außerhalb der Überbrückungskupplungsanordnung liegenden ersten Torsionsschwingungsdämpferbereich und einen im Wesentlichen radial innerhalb der Überbrückungskupplungsanordnung liegenden zweiten Torsionsschwingungsdämpferbereich umfasst. Dabei kann dann insbesondere im Bereich des radial äu ßeren Torsionsschwingungsdämpferbereichs in Verbindung mit dem Gehäuse der Fluidumlenkungsraumbereich gebildet sein.

Bei einer baulich auf Grund der geringen Teilezahl sehr einfach zu realisierenden Ausgestaltungsform kann weiter vorgesehen sein, dass der erste Reibelemententräger durch einen Axialstufenbereich des Gehäuses gebildet ist. Hier ist also der erste Reibelemententräger ein integraler Bestandteil des Gehäuses selbst.

Die vorliegende Erfindung wird nachfolgend mit Bezug auf die beiliegenden Zeichnungen detailliert beschrieben. Es zeigt:
- Fig. 1: eine Teil-Längsschnittansicht eines hydrodynamischen Drehmo- mentwandlers;
- Fig. 2: eine vergrößerte Detailansicht, welche den Bereich einer Über- brückungskupplungsanordnung des Drehmomentwandlers der Fig. 1 zeigt;
- Fig. 3: eine perspektivische Ansicht eines bei der Überbrückungskupp- lungsanordnung der Fig. 2 eingesetzten Reibelements mit Reib- belägen.

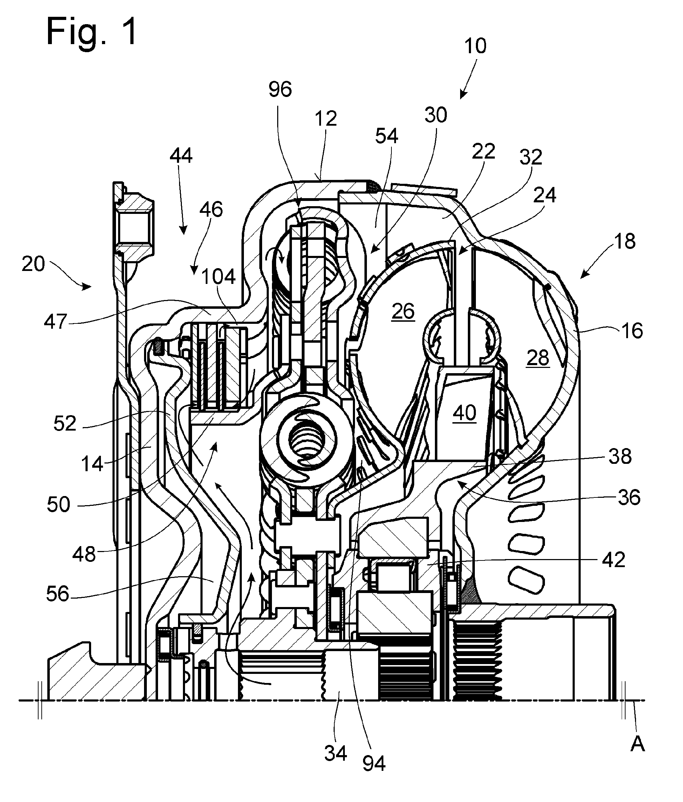

In Fig. 1 ist eine hydrodynamische Kopplungseinrichtung in Form eines hydrodynamischen Drehmomentwandlers allgemein mit 10 bezeichnet. Dieser hydrodynamische Drehmomentwandler umfasst ein Gehäuse 12 mit einer motorseitigen Gehäuseschale 14 und einer getriebeseitigen Gehäuseschale 16, die gleichzeitig auch eine Außenschale für ein Pumpenrad 18 bereitstellt. Die motorseitige Gehäuseschale 14 kann über eine Kopplungsanordnung 20 an ein Antriebsorgan, beispielsweise eine Kurbelwelle einer Brennkraftmaschine angekoppelt und somit mit dieser zur gemeinsamen Drehung um eine Drehachse A gekoppelt werden.

In einem Innenraum 22 des Gehäuses 12 ist ein allgemein mit 24 bezeichnetes Turbinenrad vorgesehen. Dieses liegt mit seinen Turbinenradschaufeln 26 den Pumpenradschaufeln 28 des Pumpenrads 18 axial gegenüber. Über eine allgemein mit 30 bezeichnete und hier zweistufig ausgebildete Torsionsschwingungsdämpferanordnung ist eine die Turbinenradschaufeln 26 tragende Turbinenradschale 32 an eine Turbinenradnabe 34 angekoppelt. Diese Turbinenradnabe 34 wird über Keilverzahnung oder dergleichen mit einer Getriebeeingangswelle gekoppelt und kann somit als Abtriebsorgan interpretiert werden.

Axial zwischen dem Turbinenrad 24 und dem Pumpenrad 18 ist ein Leitrad 36 angeordnet. Die an einem Leitradring 38 getragenen Leitradschaufeln 40 sind über eine Freilaufanordnung 42 auf einer nicht dargestellten Stützhohlwelle so getragen, dass sie in einer Richtung um die Drehachse A rotieren können, gegen Rotation in der anderen Richtung jedoch blockiert sind.

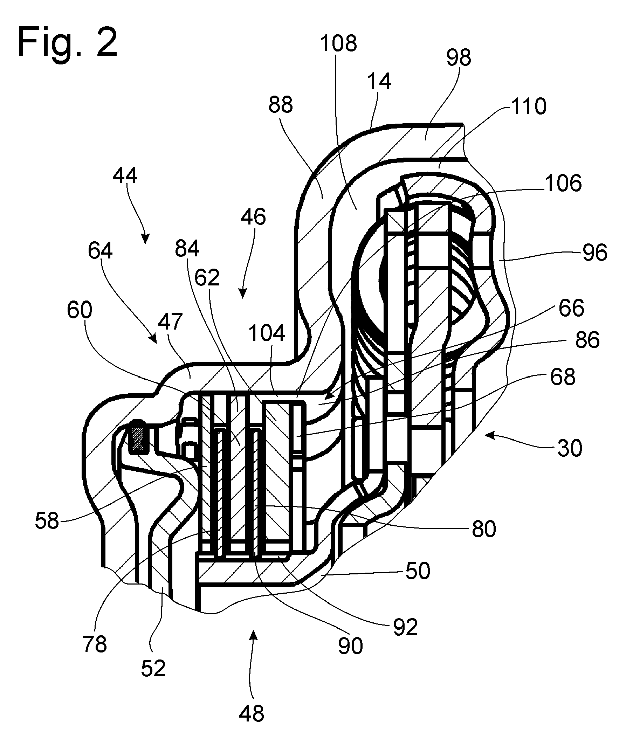

Eine Überbrückungskupplungsanordnung 44 ermöglicht eine direkte mechanische Kopplung des Turbinenrads 24, insbesondere also auch der Turbinenradnabe 34, mit dem Gehäuse 12. Die Überbrückungskupplungsanordnung 44 umfasst, wie nachfolgend mit Bezug auf die Fig. 2 deutlicher noch erläutert, zwei Gruppen 46, 48 von Reibelementen. Die erste Gruppe 46 von Reibelementen ist mit der Gehäuseschale 14 zur gemeinsamen Drehung um die Drehachse A gekoppelt, beispielsweise durch jeweilige Verzahnungsformationen, ist bezüglich der Gehäuseschale 14 jedoch axial bewegbar. Bei dieser Ausgestaltung stellt also die Gehäuseschale 14 einen äußeren Reibelemententräger 47 für die erste Gruppe 46 von Reibelementen bereit. Ein innerer Reibelemententräger 50 trägt die zweite Gruppe 48 von Reibelementen drehfest, beispielsweise ebenfalls über entsprechende Verzahnungsformationen, und stellt über die Torsionsschwingungsdämpferanordnung 30 eine Verbindung mit der Turbinenradnabe 34 her.

Ein als Anpresselement wirksamer Kupplungskolben 52 ist bezüglich des Gehäuses 12 axial bewegbar und unterteilt den Innenraum 22 in einen ersten Raumbereich 54 und einen zweiten Raumbereich 56. Im ersten Raumbereich 54 liegt insbesondere auch die Torsionsschwingungsdämpferanordnung 30, ebenso wie das Turbinenrad 24. Durch Einstellung der Druckverhältnisse in den beiden Raumbereichen 54, 56 bezüglich einander wird es möglich, den Kupplungskolben 52 axial zu verschieben. Wird der Kupplungskolben in der Fig. 1 nach rechts, also in Richtung von einer Brennkraftmaschine oder einem sonstigen Antriebsaggregat weg verschoben, was durch Erhöhung des Fluiddrucks im Raumbereich 56 bezüglich des Fluiddrucks im Raumbereich 54 erfolgt, so beaufschlagt er die beiden Gruppen 46, 48 von Reibelementen gegeneinander und bringt somit die Überbrückungskupplungsanordnung 44 in einen Einrückzustand. Wird der Druck im Raumbereich 56 bezüglich des Raumbereichs 54 gesenkt, bewegt sich der Kupplungskolben 52 wieder zurück auf die Gehäuseschale 14 zu und mindert somit seine Beaufschlagungswirkung, so dass die Überbrückungskupplungsanordnung in Richtung Auskuppeln verstellt wird.

Die Fig. 2 zeigt detaillierter den Aufbau der Überbrückungskupplungsanordnung mit ihren beiden Gruppen 46, 48 von Reibelementen. Die erste Gruppe 46 umfasst im dargestellten Beispiel drei axial gestaffelt liegende Reibelemente 58, 60, 62. Das in einem ersten axialen Endbereich 64 der ersten Gruppe 46 angeordnete Reibelement 48 wird durch den Kupplungskolben 52 unmittelbar beaufschlagt. Das an einem zweiten axialen Endbereich 66 angeordnete Reibelement 62 der ersten Gruppe 46 von Reibelementen ist in axialer Richtung vom Kupplungskolben 52 weg an einem bezüglich der Gehäuseschale 14 arretierten Sicherungsring 68 abgestützt. Das Reibelement 62 bildet also bei Beaufschlagung der beiden Gruppen 46, 48 von Reibelementen ein axiales Widerlager.

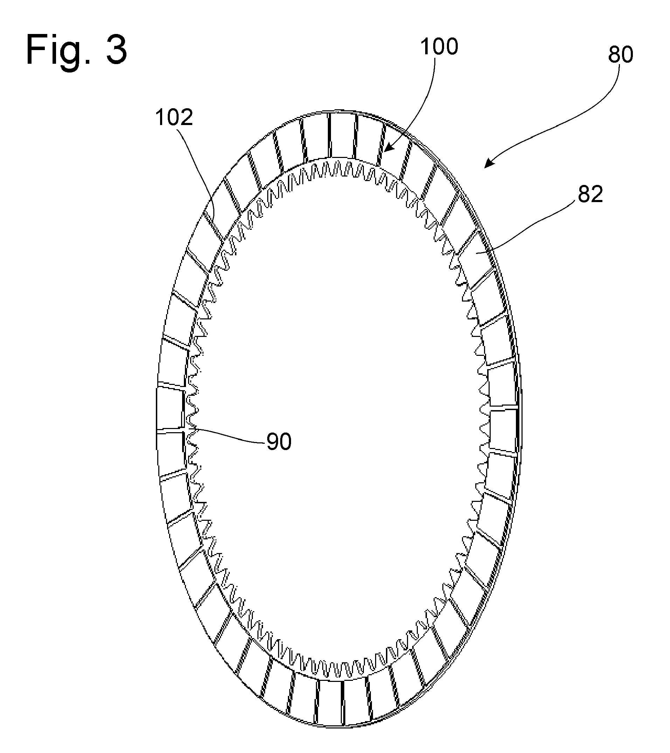

Während die Reibelemente 58, 60, 62 der ersten Gruppe 46 von Reibelementen mit einem beispielsweise aus Stahlmaterial aufgebauten Reibelementenkörper ohne zusätzliche Reibbeläge ausgebildet sind, sind die Reibelemente 78, 80 der zweiten Gruppe 48 von Reibelementen mit beispielsweise ebenfalls aus Stahlmaterial aufgebauten Reibelementenkörpern und an beiden axialen Seiten daran jeweils vorgesehenen Reibbelägen aufgebaut. Beispielsweise ist in Fig. 3 anhand des Reibelements 80 der an einer axialen Seite vorgesehene Reibbelag 82 erkennbar.

Wie bereits angesprochen, sind die Reibelemente 58, 60, 62 der ersten Gruppe 46 von Reibelementen mit ihren Reibelemententräger 47, also der Gehäuseschale 14, durch Verzahnungseingriff drehfest gekoppelt. Hierzu weisen die Reibelemente 58, 60, 62 an ihrem Außenumfangsbereich jeweils eine Verzahnungsformation 84 auf, die mit einer Gegenverzahnungsformation 86 an der Gehäuseschale 14 in Kämmeingriff steht. Diese Gegenverzahnungsformation 86 wird beim Umformungsvorgang bei der Herstellung der Gehäuseschale 14 integral mit angeformt und ist in einem den Reibelemententräger 47 bereitstellenden axialstufenartigen Abschnitt der Gehäuseschale 14 gebildet. An dem der Torsionsschwingungsdämpferanordnung 30 zugeordneten axialen Ende des Reibelemententrägers 47 ist die Gegenverzahnungsformation 86 axial offen. An diesem Bereich geht die Gehäuseschale 14 in einen nach radial außen sich entlang der Torsionsschwingungsdämpferanordnung 30 sich erstreckenden Abschnitt 88 über. Somit können die Reibelemente 58, 60, 62 axial aufgeschoben bzw. mit ihren jeweiligen Verzahnungsformationen 84 in Kämmeingriff mit der Gegenverzahnungsformation 86 gebracht werden. Daraufhin wird dann der Sicherungsring 68 aufgeschoben, welcher in eine an der Gegenverzahnungsformation 86 gebildete Umfangsnut einrasten kann.

Auch im Bereich der Reibelemente 78, 80 bzw. des inneren Reibelemententrägers 50 ist ein derartiger Verzahnungseingriff realisiert. Die Reibelemente 78, 80 weisen jeweils eine Verzahnungsformation 90 auf, die mit einer entsprechenden Gegenverzahnungsformation 92 am Reibelemententräger 50 in Kämmeingriff steht. Für eine Axialsicherung braucht hier nicht gesorgt werden, da die Reibelemente 78, 80 in axialer Richtung zwischen den Reibelementen 58, 60, 62 der ersten Gruppe 46 von Reibelementen gehalten sind.

Man erkennt in den Fig. 1 und 2 weiter, dass die Torsionsschwingungsdämpferanordnung 30 zweistufig ausgebildet ist, mit einem radial inneren Torsionsschwingungsdämpferbereich 94, welcher im Wesentlichen auch radial innerhalb der Überbrückungskupplungsanordnung 44 bzw. der Reibelemente derselben liegt, und einen radial äußeren Torsionsschwingungsdämpferbereich 96, der im Wesentlichen radial außerhalb der Überbrückungskupplungsanordnung 44 bzw. Reibelemente derselben liegt. Der bereits angesprochene Abschnitt 88 der Gehäuseschale 14 erstreckt sich neben dem radial äußeren Torsionsschwingungsdämpferbereich 96 nach radial außen und geht am Außenumfangsbereich desselben in einen im Wesentlichen axial sich erstreckenden Abschnitt 98 über, der einen vergleichsweise geringen radialen Abstand zum radial äußeren Torsionsschwingungsdämpferbereich 96 aufweist.

Bei dem in den Fig. 1 und 2 dargestellten Aufbau eines hydrodynamischen Drehmomentwandlers wird das im ersten Raumbereich 22 vorzusehende Fluid, also beispielsweise Öl, in einem radial inneren Bereich axial zwischen der Torsionsschwingungsdämpferanordnung 10 und dem Kupplungskolben 52 eingeleitet, wie dies die Strömungspfeile in der Fig. 1 verdeutlichen. Das so zugeführte Fluid strömt auch fliehkraftbedingt nach radial außen bis in den Bereich des radial inneren Reibelemententrägers 50. An dessen axialen Endbereich strömt das Fluid vorbei in den Bereich, in welchem die Reibelemente 78, 80 der zweiten Gruppe 48 von Reibelementen mit ihren Verzahnungsformationen 90 in Kämmeingriff stehen mit der Gegenverzahnungsformation 92. Durch die vorherrschenden Druckverhältnisse wird das Fluid weiter nach radial außen gedrängt, wobei es insbesondere dann, wenn die Überbrückungskupplungsanordnung 44 nicht im Einrückzustand ist und mithin zwischen den einzelnen Reibelementen 58, 78, 60, 80, 62 geringfügiger axialer Zwischenraum vorhanden ist, weiter nach radial außen strömen kann.

Um diese Strömung auch im Einrückzustand, insbesondere im Schlupfzustand zu ermöglichen, ist vorzugsweise im Bereich der Reibbeläge der Reibelemente 78, 80 jeweils eine Strömungskanalformation 100, beispielsweise mit einer Vielzahl sich radial erstreckender Kanäle 102 vorgesehen, wie dies anhand des Reibbelags 82 in der Fig. 3 veranschaulicht ist. Für diese Strömungskanalformationen sind verschiedenste Geometrien möglich, die mit rein radialer Erstreckung oder auch mit Umfangserstreckungskomponenten ausgebildet sein können. Von Bedeutung ist jedoch, dass eine Verbindung zwischen dem radial inneren Endbereich eines jeweiligen Reibbelags und dem radial äußeren Endbereich desselben hergestellt ist, so dass auch dann, wenn die einzelnen Reibelemente unmittelbar aneinander anliegen, Fluid von radial innen nach radial außen strömen kann und mithin Wärme aus dem Bereich der reibend miteinander in Kontakt stehenden Oberflächen abführen kann.

Um diese Fluidströmung zu erleichtern, ist bei dem erfindungsgemäßen Aufbau eines hydrodynamischen Drehmomentwandlers vorgesehen, dass im Bereich der Verzahnungsformationen 84 der ersten Gruppe 46 von Reibelementen der Fluiddurchtritt erleichtert wird. Man erkennt deutlich in Fig. 2, dass das der Torsionsschwingungsdämpferanordnung 30 am nächstliegenden positionierte Reibelement 62 der ersten Gruppe 46 so ausgebildet ist, dass seine Verzahnungsformation 84 insbesondere gegenüber der Verzahnungsformation 84 des dem Kupplungskolben 58 am nächstliegend positionierten Reibelements 58 etwas verkürzt ist, so dass sich in Verbindung mit der Ausgestaltung der Gegenverzahnungsformation 86 eine Fluiddurchtrittspassage 104 zwischen dem Außenumfang der Verzahnungsformation 84 und dem Reibelemententräger 47, hier also der Gehäuseschale 14, einstellt. Entsprechend ist auch der Sicherungsring 68 so dimensioniert, dass eine weitere Fluiddurchtrittspassage 106 an dessen Außenumfang entsteht. Fluid, das also von radial innen in den Bereich der Reibelemente 58, 78, 60, 80, 62 gelangt, strömt insbesondere auch im Einrückzustand durch die Strömungskanalformation 102 hindurch nach radial außen und kann auf Grund des Vorhandenseins der Fluiddurchtrittspassagen 104, 106 ohne weitere Strömungseinschnürung dann, wie dies die Strömungspfeile in der Fig. 1 verdeutlichen, entlang des äußeren Reibelemtenträgers 47 zunächst in Richtung auf die Torsionsschwingungsdämpferanordnung 30 zu strömen. Fliehkraftbedingt wird das Fluid dann nach radial außen gelangen, in den Bereich eines in Fig. 2 auch erkennbaren Strömungsumlenkungsraumbereichs 108. Dieser Strömungsumlenkungsraumbereich 108 ist in seinem radial äußeren Bereich durch eine zwischen dem Abschnitt 98 der Gehäuseschale 14 und dem Außenumfangsbereich des radial äußeren Torsionsschwingungsdämpferbereichs gebildeten Einschnürung 110 gegen Fluiddurchtritt gedrosselt, so dass das fliehkraftbedingt nach radial außen in den Strömungsumlenkungsraumbereich 108 gelangende Fluid gestaut wird und zumindest zum Teil wieder nach radial innen umgelenkt wird. Dies wird auch dadurch unterstützt, dass insbesondere im Schlupfbetrieb die Torsionsschwingungsdämpferanordnung 30 sich mit geringerer Drehzahl drehen wird, als die Gehäuseschale 14. Das heißt, durch die Schermitnahmewirkung des Abschnitts 88 der Gehäuseschale 14 und des radial äußeren Torsionsschwingungsdämpferbereichs 96 wird das in der Darstellung der Fig. 2 links nach radial außen strömende Fluid eine stärkere Fliehkrafteinwirkung erfahren, als das rechts entlang des radial äußeren Torsionsschwingungsdämpferbereichs 96 strömende Fluid, so dass hier eine Fluidströmungsrichtung, wie sie in Fig. 1 mit einem Strömungsumlenkungspfeil angedeutet ist, unterstützt bzw. eingestellt wird. Das Fluid strömt dann nach radial innen entlang des radial äußeren Torsionsschwingungsdämpferbereichs 96 in Richtung auf den inneren Reibelemententräger 50 und den radial inneren Bereich der Reibelemente der beiden Gruppen 46, 48 von Reibelementen zu, so dass es erneut durch die Strömungskanalformationen 102 hindurchtreten kann. Es wird also hier zusätzlich zu der durch Fluidzufuhr und Fluidabfuhr zu bzw. von dem ersten Raumbereich 54 eingestellten "globalen" Fluidzirkulation eine "lokale" Fluidzirkulation im Bereich der Reibelemente der beiden Gruppen 46, 48 von Reibelementen eingestellt. Diese lokale Zirkulation wird auch dann auftreten, wenn eine Fluidzufuhr in den ersten Raumbereich 22 nicht auftritt, beispielsweise um den Fluiddruck im ersten Raumbereich 54 gegenüber dem Fluiddruck im zweiten Raumbereich 56 zu senken.

Mit der erfindungsgemäßen Ausgestaltung insbesondere der Überbrückungskupplungsanordnung wird es möglich, eine verstärkte Wärmeabfuhr aus dem Bereich der reibend miteinander in Wechselwirkung tretenden Oberflächen sicherzustellen. Es sei darauf hingewiesen, dass verschiedene Variationen möglich sind, so könnte beispielsweise auch im Bereich des zentral in der ersten Gruppe 46 angeordneten Reibelements 60 eine verkürzte Verzahnungsformation vorgesehen sein, die einen weiter erleichterten Fluiddurchtritt in Richtung auf die Torsionsschwingungsdämpferanordnung zu gestattet. Auch im Bereich der zweiten Gruppe von Reibelementen können die Verzahnungsformationen der Reibelmente auf die zugeordnete Gegenverzahnungsformation so abgestimmt sein, dass sowohl von der dem Kolbenelement zugewandten Seite, als auch von der der Torsionsschwingungsdämpferanordnung zugewandten Seite ein erleichterter Fluideintritt ermöglicht ist. Dies unterstützt weiter auch die Rückführung von Fluid aus dem Strömungsumlenkungsraumbereich bzw. die Ansaugwirkung, in welcher derartiges Zurückströmen des Fluid in den radial inneren Bereich der Reibelemente gefördert wird.

## Patentansprüche

1. Hydrodynamische Kopplungseinrichtung, insbesondere Drehmomentwandler, umfassend ein mit Fluid gefülltes oder füllbares Gehäuse (12) mit einem Pumpenrad (18), ein im Innenraum (22) des Gehäuses (12) angeordnetes Turbinenrad (24), eine Überbrückungskupplungsanordnung (44) mit einer ersten Gruppe (46) von Reibelementen, welche durch einen äußeren ersten Reibelemententräger (47) mit dem Gehäuse (12) zur gemeinsamen Drehung um eine Drehachse (A) gekoppelt sind und einer zweiten Gruppe (48) von Reibelementen, welche durch einen inneren zweiten Reibelemententräger (50) mit einem Abtriebsorgan (34) zur gemeinsamen Drehung um die Drehachse (A) gekoppelt sind, wobei der Innenraum (22) des Gehäuses (12) durch ein Kolbenelement (52) in einen das Turbinenrad (24), die Überbrückungskupplungsanordnung (44) und eine axial zwischen dem Turbinenrad (24) und der Überbrückungskupplungsanordnung (44) angeordnete Torsionsschwingungsdämpferanordnung (30) enthaltenden ersten Raumbereich (54) und einen zweiten Raumbereich (56) unterteilt ist, wobei die Reibelemente (58, 60, 62) der ersten Gruppe (46) von Reibelementen an ihrem Außenumfangsbereich eine Verzahnungsformation (84) aufweisen, die mit einer Gegenverzahnungsformation (86) am ersten Reibelemententräger (47) in Drehkopplungseingriff steht, und wobei wenigstens bei dem der Torsionsschwingungsdämpferanordnung (30) axial am nächsten positionierten Reibelement (62) der ersten Gruppe (46) von Reibelementen die Verzahnungsformation (84) und die Gegenverzahnungsformation (86) derart aufeinander abgestimmt sind, dass sie eine Fluiddurchtrittspassage (104) bilden.

2. Hydrodynamische Kopplungseinrichtung nach Anspruch 1,
**dadurch gekennzeichnet, dass** das der Torsionsschwingungsdämpferanordnung (30) axial am nächsten positionierte Reibelement (62) der ersten Gruppe (46) von Reibelementen axial bezüglich des ersten Reibelemententrägers (47) durch ein Sicherungselement (68) gestützt ist, und dass das Sicherungselement (68) und die Gegenverzahnungsformation (86) am ersten Reibelemententräger (47) derart aufeinander abgestimmt sind, dass sie eine an die Fluiddurchtrittspassage (104) anschließende weitere Fluiddurchtrittspassage (106) bilden.

3. Hydrodynamische Kopplungseinrichtung nach Anspruch 1 oder 2,
**dadurch gekennzeichnet, dass** bei einem dem Kolbenelement (52) axial am nächsten positionierten Reibelement (58) der ersten Gruppe (46) von Reibelementen die Verzahnungsformation (84) und die Gegenverzahnungsformation (86) derart aufeinander abgestimmt sind, dass ein in einem Eingriffsbereich der Verzahnungsformation (84) und der Gegenverzahnungsformation (86) gebildeter Fluiddurchtrittsquerschnitt kleiner ist als bei dem der Torsionsschwingungsdämpferanordnung (30) axial am nächsten positionieren Reibelement (62) der ersten Gruppe (46) von Reibelementen.

4. Hydrodynamische Kopplungseinrichtung nach einem der Ansprüche 1 bis 3,
**dadurch gekennzeichnet, dass** an den Reibelementen (58, 60, 62) der ersten Gruppe (46) von Reibelementen oder/und den Reibelementen (78, 80) der zweiten Gruppe (48) von Reibelementen Strömungskanalanordnungen (102) vorgesehen sind, über welche Fluid zwischen einem radial inneren Bereich und einem radial äußeren Bereich der Reibelemente (58, 60, 62, 78, 80) strömen kann.

5. Hydrodynamische Kopplungseinrichtung nach einem der Ansprüche 1 bis 4,
**dadurch gekennzeichnet, dass** dem ersten Raumbereich (54) Fluid radial innen zwischen dem Kolbenelement (52) und der Torsionsschwingungsdämpferanordnung (30) zuführbar ist.

6. Hydrodynamische Kopplungseinrichtung nach einem der Ansprüche 1 bis 5,
**dadurch gekennzeichnet, dass** die Torsionsschwingungsdämpferanordnung (30) sich nach radial außen bis über die Überbrückungskupplungsanordnung (44) hinaus erstreckt und in Verbindung mit dem Gehäuse (12) einen Fluidumlenkungsraumbereich (108) bildet, in welchem durch die Fluiddurchtrittspassage (104) hindurch getretenes und nach radial außen geströmtes Fluid nach radial innen in Richtung auf den radial inneren Bereich der Reibelemente (58, 60, 62, 78, 80) zu umgelenkt wird.

7. Hydrodynamische Kopplungseinrichtung nach Anspruch 6,
**dadurch gekennzeichnet, dass** die Torsionsschwingungsdämpferanordnung (30) einen im Wesentlichen radial außerhalb der Überbrückungskupplungsanordnung (44) liegenden ersten Torsionsschwingungsdämpferbereich (96) und einen im Wesentlichen radial innerhalb der Überbrückungskupplungsanordnung (44) liegenden zweiten Torsionsschwingungsdämpferbereich (94) umfasst.

8. Hydrodynamische Kopplungseinrichtung nach Anspruch 6 und Anspruch 7,
**dadurch gekennzeichnet, dass** der erste Reibelemententräger (47) durch einen Axialstufenbereich des Gehäuses (12) gebildet ist.
